# EUROPEAN PATENT SPECIFICATION

(11) **EP 1 629 065 B1**
(45) Date of publication and mention of the grant of the patent: **04.03.2015**
(21) Application number: 04741737.3
(22) Date of filing: 04.06.2004
(51) Int. Cl.: C10G 11/18, B01J 8/00, B01J 8/38, B04C 5/26, B04C 5/13, B04C 5/12, B01D 45/16

(54) **SEPARATION APPARATUS**
TRENNVORRICHTUNG
APPAREIL DE SEPARATION

(30) Priority: 04.06.2003 EP 03076733
(43) Date of publication of application: 01.03.2006
(73) Proprietor: Shell Internationale Research Maatschappij B.V., 2596 HR Den Haag (NL)
(72) Inventor: DIRKSE, Hendricus Arien, NL-1031 CM Amsterdam (NL); DRIES, Hubertus Wilhelmus Albertus, NL-1031 CM Amsterdam (NL)
(86) International application number: PCT/EP2004/051036
(87) International publication number: WO 2004/108861

(56) References cited:
- EP-A- 0 604 026
- EP-A- 0 613 935
- WO-A-00/50538
- GB-A- 2 362 117
- US-A- 3 123 547
- US-A- 4 737 346

## Description

### Field of the invention

The invention is directed to an improved separation apparatus, wherein particles can be efficiently separated from a gas-particles mixture. The invention is also directed to the use of such an apparatus in a fluid catalytic cracking process.

### Background of the invention

The field of fluid catalytic cracking (FCC) has undergone significant development improvements due primarily to advances in catalyst technology and product distribution obtained therefrom. With the advent of high activity catalysts and particularly crystalline zeolite cracking catalysts, new areas of operating technology have been encountered requiring even further refinements in processing techniques to take advantage of the high catalyst activity, selectivity and operating sensitivity. Of particular concern in this field has been the development of methods and systems for separating the hydrocarbon product from the catalyst particles, particularly from a high activity crystalline zeolite cracking catalysts, under more efficient separating conditions so as to reduce the overcracking of conversion products and promote the recovery.of desired products of an FCC operation. Patent publications EP-A-162978, EP-A-629679, US-A-5248411 and EP-A-604026 all describe developments concerned with the rapid separation and recovery of entrained catalyst particles from the hydrocarbon products. The rapid separation is achieved in that the catalyst are separated from the reactor riser effluent in a first cyclone separator, the primary cyclone, of which gas outlet conduit is in fluid connection with a secondary cyclone. This cyclone line up in FCC reactors is also referred to as close-coupled cyclone separation provided that the primary and secondary cyclones are contained in one larger vessel. This coupling of primary and secondary cyclones minimises the residence time in which the hydrocarbon product is in contact with the catalyst after it leaves the reactor riser, which limits undesirable aftercracking.

In the connecting conduit between primary and secondary cyclone an opening or slit may be present through which gas may enter from the exterior of the cyclone configuration. Such a slit as disclosed in the above referred to patent publications is used to allow stripping gas to be discharged from the FCC reactor together with the hydrocarbon products.

Various designs have been proposed for the slit in the connecting conduit. A commonly used design is described in EP-A-162978. In this design the gas inlet opening of the inlet conduit connected to the gas inlet of the secondary cyclone has a larger diameter than the gas outlet opening of the outlet conduit connected to the gas outlet of the primary cyclone. In said design the inlet conduit overlaps the outlet conduit. The annular space between the two conduits forms the slit opening. The two conduit parts can move relative to each other. This allows the primary cyclone, which is usually fixed to the reactor riser, and the secondary cyclones, which are normally fixed to the roof of the FCC reactor vessel, to move relative to each other during start-up and shut down operations. Such relative movement will occur due to the different thermal expansion of the cited different parts in said FCC reactor vessel.

EP-A-613935 describes a configuration of two cyclones for separation of solids from a solids-gas mixture wherein the gas outlet of the first cyclone is fluidly connected to an outlet conduit provided with a gas outlet opening and the gas inlet of the second cyclone is connected to an inlet conduit provided with a gas inlet opening, wherein the outlet conduit and inlet conduit are arranged co-axial such that gas leaving the outlet opening of the outlet conduit and gas from the exterior of the cyclone configuration can enter the gas inlet opening of the inlet conduit

A disadvantage of such a slit opening is that coke may grow in the annular space thereby causing the two parts of the conduit to become fixed relative to each other. During start-up and shut down operations unacceptable mechanical stress may then be exercised upon the cyclone configuration, which may eventually cause serious damage. The object of the present invention is to provide a more robust slit design for the closed-coupled cyclone configuration.

### Summary of the invention

Configuration of two cyclones for separation of solids from a solids-gas mixture wherein the gas outlet of a first cyclone is fluidly connected to an outlet conduit provided with a gas outlet opening and the gas inlet of the second cyclone is connected to an inlet conduit provided with a gas inlet opening. The outlet and inlet conduit are arranged co-axial such that gas leaving the outlet opening of the outlet conduit enters the inlet opening of the inlet conduit. Gas from the exterior of the cyclone configuration can enter the gas inlet opening of the inlet conduit. The gas outlet opening and the gas inlet opening are axially spaced away from each other. The interior of the gas outlet tube is provided with means to decrease the swirling motion of the gas passing said outlet conduit.

Applicants found that when the outlet conduit of the primary cyclone and the inlet conduit of the secondary cyclone do not overlap a slit is formed which is less prone to coke formation. Applicants have further found it to be essential that the outlet conduit of the primary cyclone is provided with means to decrease the swirling motion in said conduit. This is advantageous because otherwise the gas would move radialy away from the centre of the conduit and away from to the inlet opening (8) of the inlet conduit (7).

The invention is also directed to a FCC reactor comprising the cyclone configuration described above, the downstream end of a FCC reactor riser fluidly connected to the inlet opening of the primary cyclone, and a gas outlet fluidly connected to the gas outlet of the secondary cyclone and a solids outlet at the lower end of the vessel.

The invention is also directed to a catalytic cracking process making use of said FCC reactor.

The invention shall be described in more detail below, including some preferred embodiments.

### Brief Description of the drawings

Figure 1 illustrates a cross-sectional presentation of part of a close-coupled cyclone apparatus in an FCC reactor.
Figure 2 illustrates the top of the primary cyclone and the up stream end of connecting conduit (7).
Figures 3 illustrates a top view of the primary cyclone of Figure 2.
Figure 4 shows a preferred embodiment of the primary cyclone and the upstream end of connecting conduit (7).

### Detailed description of the drawings

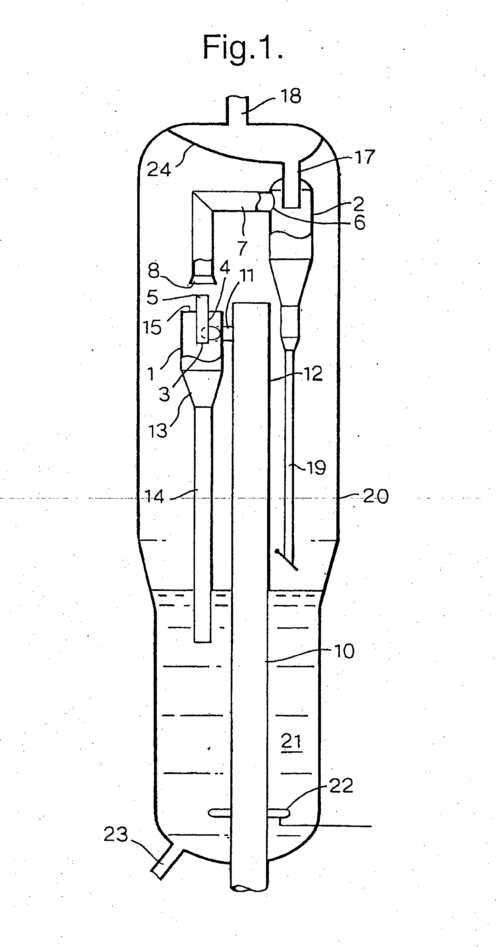

Figure 1 represent a preferred embodiment of the apparatus according to the invention. In the Figure a reactor riser (10) of a fluidized catalytic cracking process is shown which is fluidly connected via conduit (11) to a primary cyclone (1). In the Figure only one primary cyclone separator is shown for clarity reasons. Typically more than one, suitably two or three, primary cyclone separators (1) will be in fluid communication with the downstream end (12) of a reactor riser (10). The primary cyclone (1) has a tubular housing provided with a tangentially arranged inlet for receiving the suspension of catalyst particles and hydrocarbon vapour which leave the reactor riser (10). The lower end of the tubular housing is fluidly connected by means of a frusto conical wall section (13) to a dipleg (14). Through dipleg (14) most of the catalyst particles will be discharged downwards. The upper end of the tubular housing is provided with a cover (15). Cover (15) is provided with an axial circular opening (16) through which opening a gas outlet conduit (4) protrudes.

In Figure 1 only one secondary separator (2) is shown for clarity reasons. More than one, for example two, secondary separators (2) may be in fluid communication with one primary cyclone (1). Through a gas outlet conduit (17) of the secondary cyclone (2) the hydrocarbon vapours, which are poor in catalyst particles, are discharged from the FCC reactor vessel via plenum (24) and gas outlet (18). The vapours may be further processed in downstream product separation equipment. The secondary cyclone (2) is further provided with a dipleg (19) to discharge separated catalyst particles downwards.

The reactor vessel (20) further comprises at its lower end a stripping zone (21) provided with means (22) to supply a stripping medium to a dense fluidized bed of separated catalyst particles, which forms stripping zone (21). Stripping medium can be any inert gas. Steam or steam containing gasses are suitably used as stripping medium.

The reactor vessel (20) further comprises means to discharge stripped catalyst particles from the vessel via conduit (23). Via conduit (23) stripped, or also referred to as spent catalyst, is transported to a regeneration zone (not shown). In such a regeneration zone coke is removed from the catalyst by means of (partial) combustion. Regenerated catalyst is transported to the upstream part of the reactor riser where it is contacted with a hydrocarbon feed to yield the earlier referred to suspension of catalyst particles and hydrocarbon product vapours at the downstream part of the reactor riser.

The reactor vessel (20) further comprises means to discharge the hydrocarbon and stripping medium vapours from the vessel via conduit (18).

The primary cyclone (1) and the secondary cyclone (2) are fluidly connected by means of outlet conduit (4) and inlet conduit (7). Outlet conduit (4) is fluidly connected to a gas outlet opening (3) of the primary cyclone (1). Outlet conduit (4) is at its opposite end provided with a gas outlet opening (5).

The inlet conduit (7) is fluidly connected to the gas inlet (6) of the second cyclone (2). The two conduits (4, 7) are arranged co-axial such that gas leaving the outlet opening (5) of the outlet conduit (4) enters the inlet opening (8) of the inlet conduit (7). Also stripping gas from the stripping zone (21) can enter the gas inlet opening (8) of the inlet conduit (7). The gas outlet opening (5) and the gas inlet opening (8) are axially spaced away from each other.

As shown in Figure 1 the primary cyclone (1) is fixed to the riser (10) and the secondary cyclones (2) is fixed to the upper end of vessel (20). This will result in that during start-up and cool down situations the relative distance between openings (5) and (8) may vary during to the different thermal expansion of the different parts of vessel (20). By non-overlapping opening is here meant that there is a non-overlapping situation at normal operating conditions.

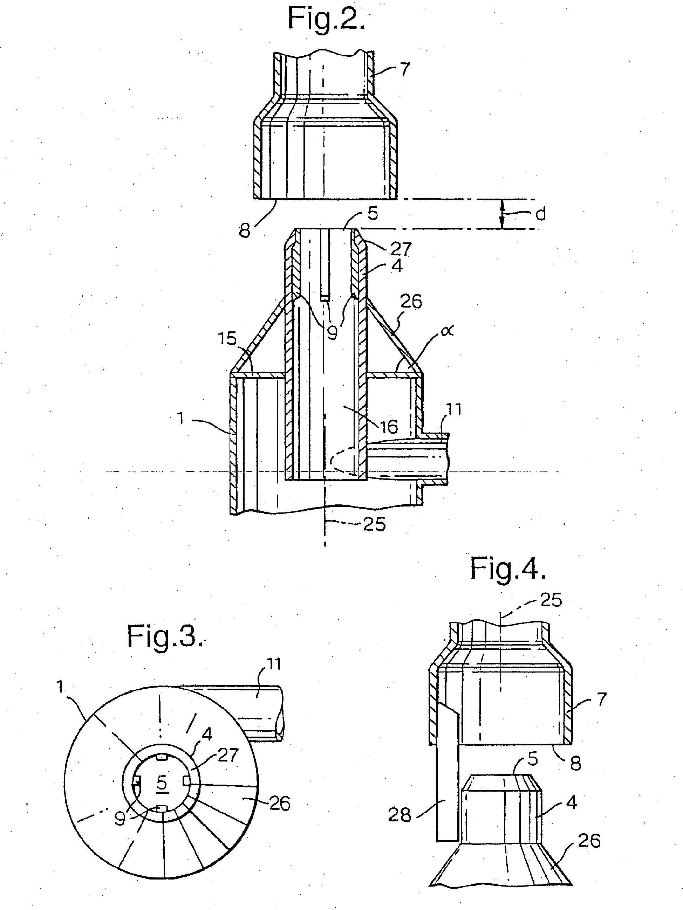

Figure 2 shows the upper end of the primary cyclone (1) and the lower end of the inlet conduit (7). The reference numbers have the same meaning as in Figure 1. The interior of the gas outlet tube (4) is provided with means (9) to decrease the swirling motion of the gas passing said outlet conduit (4). These means (9) may be baffles fixed to the inner surface of conduit (4). Preferably these baffles extend radialy from the surface towards the center of the conduit. These means (9) may be positioned along the wall parallel to the axis (25) (as shown). Alternatively the means (9) may be positioned under an angle relative to the axis (25) such that they are directed in the direction of the swirl but at a lesser angle than the swirl itself such that a decrease in the swirling would still be achieved.

Opening (5) is preferably provided with a tapered opening (27) such to further direct the gas into opening (8). The distance (d) between opening (5) and opening (8) is zero or a positive value such to achieve a non-overlapping opening. The distance (d) is preferably between 0 and 3 times the diameter of opening (5). The diameter of opening (8) is preferably larger than the diameter of opening (5).

The configuration of Figure 2 further shows that the cover (15) of the primary cyclone is provided with a frusto conical element (26), which will further direct the stripping gas from stripping zone (21) towards opening (8). Such an element (26) is furthermore advantageous because catalyst will not deposit on the cover (15) of primary cyclone (1). The angle (α) is preferably greater than the angle of repose of the catalyst particles, more preferably the angle α is greater than 45°. The upper value for this angle is between 45 and 90° and will be determined by practical considerations such as space limitations. The invention is also directed to a cyclone configuration wherein the cover of the primary cyclone is provided with a titled roof (26) and wherein a slit is present in the connecting conduit between primary and secondary cyclone. The angle α is the angle which is formed by the surface of element (26) with the horizontal cover (15) of the cyclone.

In Figure 1 and 2 the openings (5) and (8) are located in the vertical part of the conduit connecting the primary and secondary cyclone. Optionally, but less preferred, such openings may also be located in the horizontal part of said connecting conduit.

Figure 3 shows the top view of primary cyclone 1 illustrating the tangentially inlet connected to conduit (11) and the swirl decreasing baffles (9) inside conduit (4) which are viewed via opening (5). Also shown is the upper end of conduit (4), which is slightly inward tapered end (27).

Figure 4 shows a preferred embodiment wherein the inlet conduit (7) is provided with a number of guiding means (28), of which only one is shown for clarity reasons, which will, in use, further ensure that conduits (4) and (7) will remain in a co-axial position relative to axis (25). These guiding means (28) are preferably fixed to conduit (7) and will allow that conduit movement of the inlet and outlet conduits (4,7) relative to each other in the axial direction only. These guiding means (28) may also further advantageously decrease the swirling motion of the gas leaving opening (5).

Examples of FCC processes in which the apparatus according the invention can be suitably used are described in the afore mentioned patent publications and those described in Catalytic Cracking of Heavy Petroleum Fractions, Daniel DeCroocq, Institut Français du Petrole, 1984 (ISBN 2-7108-455-7), pages 100-114. Preferably the apparatus is used in an FCC process wherein a gas solids suspension if fed to the primary cyclone having a solids content of between 1 and 12 kg/m³.

## Claims

1. Configuration of two cyclones (1,2) for separation of solids from a solids-gas mixture wherein the gas outlet (3) of a first cyclone (1) is fluidly connected to an outlet conduit (4) provided with a gas outlet opening (5) and the gas inlet (6) of the second cyclone (2) is connected to an inlet conduit (7) provided with a gas inlet opening (8), wherein the outlet conduit (4) and inlet conduit (7) are arranged co-axial such that gas leaving the outlet opening (5) of the outlet conduit (4) enters the inlet opening (8) of the inlet conduit (7) and gas from the exterior of the cyclone configuration can enter the gas inlet opening (8) of the inlet conduit (7), wherein the gas outlet opening (5) and the gas inlet opening (8) are axially spaced away from each other and wherein the interior of the gas outlet tube (4) is provided with means to decrease the swirling motion of the gas passing said outlet conduit (4).

2. Configuration of two cyclones according to claim 1, wherein the opening (5) of outlet conduit (4) is a tapered opening (27).

3. Configuration of two cyclones according to any one of claims 1-2, wherein the outlet conduit (4) and the inlet conduit (7) are arranged along a vertical co-axial axis.

4. Configuration of two cyclones according to claim 3, wherein the outlet conduit (4) and the inlet conduit (7) are kept in a co-axial position relative to each other by means of guiding means (28) which are attached to inlet conduit (7) and extend to the outlet conduit (4) thereby allowing movement of the inlet and outlet conduits (4,7) relative to each other in the axial direction only.

5. Configuration of two cyclones according to any one of claims 1-4, wherein the primary cyclone (1) is provided with a tilted roof (26).

6. Configuration according to claim 5 wherein the angle (α) formed by the tilted roof and the horizontal top of the primary cyclone (1) is greater than 45°.

## Patentansprüche

1. Konfiguration zweier Zyklone (1, 2) zur Trennung von Feststoffen von einem Feststoffgasgemisch, wobei der Gasauslass (3) eines ersten Zyklons (1) fluidtechnisch mit einer Auslassleitung (4), die mit einer Gasauslassöffnung (5) versehen ist, verbunden ist und wobei der Gaseinlass (6) des zweiten Zyklons (2) mit einer Einlassleitung (7), die mit einer Gaseinlassöffnung (8) versehen ist, verbunden ist, wobei die Auslassleitung (4) und die Einlassleitung (7) koaxial derart angeordnet sind, dass Gas, das die Auslassöffnung (5) der Auslassleitung (4) verlässt, in die Einlassöffnung (8) der Einlassleitung (7) eintritt und Gas von außerhalb der Zyklonkonfiguration in die Gaseinlassöffnung (8) der Einlassleitung (7) eintreten kann, wobei die Gasauslassöffnung (5) und die Gaseinlassöffnung (8) axial voneinander beabstandet sind und wobei das Innere des Gasauslassrohres (4) mit Mitteln versehen ist, um die Verwirbelungsbewegung des Gases, das durch die Auslassleitung (4) verläuft, zu mindern.

2. Konfiguration zweier Zyklone nach Anspruch 1, wobei die Öffnung (5) der Auslassleitung (4) eine konische Öffnung (27) ist.

3. Konfiguration zweier Zyklone nach einem der Ansprüche 1 bis 2, wobei die Auslassleitung (4) und die Einlassleitung (7) entlang einer vertikalen koaxialen Achse angeordnet sind.

4. Konfiguration zweier Zyklone nach Anspruch 3, wobei die Auslassleitung (4) und die Einlassleitung (7) durch Führungsmittel (28), die an der Einlassleitung (7) befestigt sind und sich bis zu der Auslassleitung (4) erstrecken, in einer koaxialen Position relativ zueinander gehalten werden, wodurch eine Bewegung der Einlass- und Auslassleitung (4, 7) relativ zueinander nur in der koaxialen Position möglich ist.

5. Konfiguration zweier Zyklone nach einem der Ansprüche 1 bis 4, wobei der Hauptzyklon (1) mit einem geneigten Dach (26) versehen ist.

6. Konfiguration nach Anspruch 5, wobei der Winkel (α), der von dem geneigten Dach und der horizontalen Oberseite des Hauptzyklons (1) gebildet wird, größer als 45° ist.

## Revendications

1. Configuration de deux cyclones (1,2) pour la séparation de solides à partir d'un mélange de solides-gaz dans lequel la sortie (3) de gaz d'un premier cyclone (1) est reliée de manière fluide à un conduit (4) de sortie pourvu d'une ouverture (5) de sortie de gaz et l'entrée (6) de gaz du second cyclone (2) est reliée à un conduit (7) d'entrée pourvu d'une ouverture (8) d'entrée de gaz, dans lequel le conduit (4) de sortie et le conduit (7) d'entrée sont agencés co-axialement de telle sorte que le gaz sortant de l'ouverture (5) de sortie du conduit (4) de sortie pénètre dans l'ouverture (8) d'entrée du conduit (7) d'entrée et le gaz de l'extérieur de la configuration de cyclone peut pénétrer dans l'ouverture (8) d'entrée du conduit (7) d'entrée, dans lequel l'ouverture (5) de sortie de gaz et l'ouverture (8) d'entrée de gaz sont espacées axialement l'une de l'autre et dans lequel l'intérieur (4) du tube de sortie de gaz est pourvu de moyens pour réduire le mouvement de tourbillonnement du gaz qui passe dans ledit conduit (4) de sortie.

2. Configuration de deux cyclones selon la revendication 1, dans lequel l'ouverture (5) du conduit de sortie (4) est une ouverture conique (27).

3. Configuration de deux cyclones selon l'une quelconque des revendications 1-2, dans lequel le conduit (4) de sortie et le conduit (7) d'entrée sont disposés le long d'un axe coaxial vertical.

4. Configuration de deux cyclones selon la revendication 3, dans lequel le conduit (4) de sortie et le conduit (7) d'entrée sont maintenus dans une position co-axiale l'un par rapport à l'autre par l'intermédiaire de moyens (28) de guidage qui sont fixés à l'entrée (7) du conduit et s'étendent vers le conduit (4) de sortie, permettant ainsi le mouvement des conduits d'entrée et de sortie (4,7) l'un par rapport à l'autre seulement le long de la direction axiale.

5. Configuration de deux cyclones selon l'une quelconque des revendications 1-4, dans lequel le cyclone primaire (1) est pourvu d'un toit (26) incliné.

6. Configuration selon la revendication 5, dans lequel l'angle (α) formé par le toit incliné et le haut horizontal du cyclone primaire (1) est supérieur à 45°.
